# EUROPEAN PATENT APPLICATION

(11) **EP 4 598 152 A1**
(43) Date of publication of application: **06.08.2025**
(21) Application number: 23871842.3
(22) Date of filing: 08.09.2023
(51) Int. Cl.: H04W 52/18, H04W 52/38, H04W 72/542

(54) **TERMINAL DEVICE, BASE STATION DEVICE, AND COMMUNICATION METHOD**

(30) Priority: 30.09.2022 JP 2022157608
(71) Applicant: Sharp Kabushiki Kaisha, Sakai City, Osaka 590-8522 (JP)
(72) Inventor: NOGAMI Toshizo, Sakai City, Osaka 590-8522 (JP)
(74) Representative: Müller Hoffmann & Partner
(86) International application number: PCT/JP2023/032920
(87) International publication number: WO 2024/070605

(57) **Abstract**

A terminal apparatus includes a transmitter, and a receiver. The receiver receives SR link information including information of an allowable maximum transmit power. In a case that a receive power received by the receiver is equal to or less than a threshold, the transmitter transmits a transmission frame. In transmission of the transmission frame, a transmit power is configured to be equal to or less than the allowable maximum transmit power. In a case that the threshold is equal to or less than a first value, the allowable maximum transmit power is configured to a value indicated by the information of the allowable maximum transmit power. In a case that the threshold is larger than the first value and is equal to or less than a second value, the allowable maximum transmit power is configured to a value obtained based on the value indicated by the information of the allowable maximum transmit power and the threshold.

## Description

### Technical Field

The present invention relates to a terminal apparatus, a base station apparatus, and a communication method.

This application claims priority to JP 2022-157608 filed on September 30, 2022, the contents of which are incorporated herein by reference.

### Background Art

The Institute of Electrical and Electronics Engineers Inc. (IEEE) has been continuously working to update the IEEE 802.11 specification being a wireless Local Area Network (LAN) standard in order to achieve a higher speed and frequency efficiency in wireless LAN communication. In a wireless LAN, radio communication can be performed using unlicensed bands that can be used without approval (license) by nations or regions. For applications for individuals including household applications, Internet access from residences is wirelessly established by, for example, including a wireless LAN access point function in line termination apparatuses for connection to a Wide Area Network (WAN) line such as the Internet or connecting a wireless LAN access point apparatus (AP) to a line termination apparatus. In other words, wireless LAN station apparatuses (STAs) such as smartphones and PCs can connect to wireless LAN access point apparatuses to access the Internet.

The specification of the IEEE 802.11ax was standardized in February 2021, and wireless LAN devices compliant with the specification and communication equipment such as smartphones and Personal Computers (PCs) equipped with the wireless LAN devices have appeared on the market as products that are compliant with Wi-Fi 6 (trade name; a name for IEEE 802.11ax compliant products certified by the Wi-Fi Alliance). In addition, activities for standardizing IEEE 802.11be as a standard succeeding the IEEE 802.11ax have been started. With the rapid spread of wireless LAN devices, further improvement in throughput per user in environments where wireless LAN devices are densely installed has been studied in the standardization of the IEEE 802.11be.

According to the IEEE 802.11n and subsequent standards, a mechanism of frame aggregation has been introduced as a higher throughput technique through reduction of overhead. The frame aggregation is broadly classified into Aggregated MAC Service Data Unit (A-MSDU) and Aggregated MAC Protocol Data Unit (A-MPDU). While the frame aggregation enables transmission of a large amount of data at once and improves the transmission efficiency, it increases the probability of a transmission error. Thus, the IEEE 802.11ax and subsequent standards are expected to introduce efficient error control for each MPDU in addition to improvement of transmission efficiency through frame aggregation as the major elemental technique for higher throughput. The transmission efficiency is also expected to improve due to introduction of mechanisms, such as Orthogonal Frequency Division Multiple Access (OFDMA) and inter-BSS spatical reuse, for increasing transmit opportunities (TXOPs).

### Summary of Invention

### Technical Problem

With the wireless LAN devices having become widespread, urban areas have more areas in which the wireless LAN devices are used, and depending on a place, some two-digit number of wireless LAN devices are used nearby. In a case that traffic is increased in such a congested environment and Carrier Sense Multiple Access (CSMA)-based radio medium access used in the IEEE 802.11 specifications is performed, time in which the TXOPs can be acquired is reduced due to occurrence of collision and occurrence of exposed nodes, which reduces transmission efficiency. The IEEE 802.11ax standards adopt the Inter-BSS spatial reuse technology, and alleviate partially, not fully, the problems.

An aspect of the present invention is made in view of the circumstances described above, and discloses a communication apparatus and a communication method to enable increase of opportunities in which TXOPs can be acquired, enhancement in transmission efficiency, and low latency by implementing spatial reuse operation within the same radio system (BSS).

### Solution to Problem

The communication apparatus and the communication method according to an aspect of the present invention for solving the aforementioned problem are as follows.
(1) Specifically, a radio terminal apparatus according to an aspect of the present invention includes a transmitter, and a receiver. The receiver receives SR link information including information of an allowable maximum transmit power. In a case that a receive power received by the receiver is equal to or less than a threshold, the transmitter transmits a transmission frame. In transmission of the transmission frame, a transmit power is configured to be equal to or less than the allowable maximum transmit power. In a case that the threshold is equal to or less than a first value, the allowable maximum transmit power is configured to a value indicated by the information of the allowable maximum transmit power. **In** a case that the threshold is larger than the first value and is equal to or less than a second value, the allowable maximum transmit power is configured to a value obtained based on the value indicated by the information of the allowable maximum transmit power and the threshold.
(2) A base station apparatus according to an aspect of the present invention includes a transmitter. The transmitter transmits SR link information including information of an allowable maximum transmit power.
(3) A communication method according to an aspect of the present invention is a communication method in a terminal apparatus. The communication method includes the steps of: receiving SR link information including information of an allowable maximum transmit power; in a case that a receive power is equal to or less than a threshold, transmitting a transmission frame; in transmission of the transmission frame, configuring a transmit power to be equal to or less than the allowable maximum transmit power; in a case that the threshold is equal to or less than a first value, configuring the allowable maximum transmit power to a value indicated by the information of the allowable maximum transmit power; and in a case that the threshold is larger than the first value and is equal to or less than a second value, configuring the allowable maximum transmit power to a value obtained based on the value indicated by the information of the allowable maximum transmit power and the threshold.

### Advantageous Effects of Invention

According to an aspect of the present invention, a contribution can be made to enhancement of communication efficiency in communication using a radio communication apparatus compliant with IEEE 802.11 standards.

### Brief Description of Drawings

FIG. 1 is an overview diagram illustrating examples of splitting radio resources according to an aspect of the present invention.
FIG. 2 is a diagram illustrating an example of a frame structure according to an aspect of the present invention.
FIG. 3 is a diagram illustrating an example of a frame structure according to an aspect of the present invention.
FIG. 4 is a diagram illustrating an example of communication according to an aspect of the present invention.
FIG. 5 is a diagram illustrating a configuration example of a communication system according to an aspect of the present invention.
FIG. 6 is a block diagram illustrating a configuration example of a radio communication apparatus according to an aspect of the present invention.
FIG. 7 is a block diagram illustrating a configuration example of a radio communication apparatus according to an aspect of the present invention.
FIG. 8 is an overview diagram of radio frame transmission according to an aspect of the present invention.
FIG. 9 is a diagram illustrating an example of a relationship between a threshold of a receive power detection level and allowable maximum transmit power used for channel access according to an aspect of the present invention.
FIG. 10 is a diagram illustrating an example of a relationship between the threshold of the receive power detection level and the allowable maximum transmit power used for channel access according to an aspect of the present invention.
FIG. 11 is a diagram illustrating an example of a relationship between the threshold of the receive power detection level and the allowable maximum transmit power used for channel access according to an aspect of the present invention.

### Description of Embodiments

A communication system according to the present embodiment includes an access point apparatus (also referred to as a base station apparatus) and multiple station apparatuses (or also referred to as terminal apparatuses or radio terminal apparatuses). The communication system and a network including the access point apparatus and the station apparatus will be referred to as a Basic service set (BSS: management range or cell). The station apparatus according to the present embodiment can have functions of the access point apparatus. Similarly, the access point apparatus according to the present embodiment can have functions of the station apparatus (also referred to as the terminal apparatus). Accordingly, in a case that a communication apparatus or a radio communication apparatus is simply mentioned below, the communication apparatus or the radio communication apparatus can indicate both the station apparatus and the access point apparatus. The access point apparatus may communicate with another access point apparatus.

The base station apparatus and the terminal apparatuses in the BSS are assumed to perform communication based on carrier sense multiple access with collision avoidance (CSMA/CA). Although the present embodiment is intended for an infrastructure mode in which a base station apparatus performs communication with multiple terminal apparatuses, the method of the present embodiment can also be performed in an ad hoc mode in which terminal apparatuses perform communication directly with each other. In the ad hoc mode, a terminal apparatus substitutes for a base station apparatus to form a BSS. The BSS in the ad hoc mode may also be referred to as an Independent Basic Service Set (IBSS). In the following description, a terminal apparatus that forms an IBSS in the ad hoc mode can also be considered to be a base station apparatus. The method of the present embodiment can also be performed in Peer to Peer (P2P) communication in which the terminal apparatuses perform communication directly with each other. One of methods for performing P2P communication is Tunneled Direct Link Setup (TDLS). In TDLS, traffic flowing between terminal apparatuses associated to the base station apparatus is directly transmitted and/or received between the terminal apparatuses without intervention of the base station apparatus. The method of the present embodiment can also be performed in Wi-Fi Direct (trade name). In Wi-Fi Direct, the terminal apparatuses form a Group instead of the base station apparatus. Hereinafter, the terminal apparatus as a Group owner forming a Group in Wi-Fi Direct can also be regarded as a base station apparatus.

In an IEEE 802.11 system, each apparatus can transmit transmission frames of multiple frame types in a common frame format. The transmission frame is defined in each of the physical (PHY) layer, the Medium access control (MAC) layer, and the Logical Link Control (LLC) layer. The physical layer will also be referred to as a PHY layer, and the medium access control layer will also be referred to as a MAC layer.

A transmission frame of the PHY layer will be referred to as a physical protocol data unit (PPDU; PHY protocol data unit or physical layer frame). The PPDU includes a physical layer header (PHY header) including header information and the like for performing signal processing in the physical layer, a physical service data unit (PSDU, PHY service data unit, or MAC layer frame) that is a data unit processed in the physical layer, and the like. The PSDU can include an Aggregated MAC protocol data unit (MPDU) (A-MPDU) in which multiple MPDUs serving as retransmission units in a radio section are aggregated.

A PHY header includes a reference signal such as a Short training field (STF) used for detection, synchronization, and the like of signals, a Long training field (LTF) used for obtaining channel information for demodulating data, and the like and a control signal such as a Signal (SIG) including control information for demodulating data. STFs are classified into a Legacy-STF (L-STF), a high throughput-STF (HT-STF), a very high throughput-STF (VHT-STF), a high efficiency-STF (HE-STF), an extremely high throughput-STF (EHT-STF), and the like in accordance with corresponding standards, and LTFs and SIGs are also similarly classified into an L-LTF, an HT-LTF, a VHT-LTF, an HE-LTF, an L-SIG, an HT-SIG, a VHT-SIG, an HE-SIG, and an EHT-SIG. The VHT-SIG is further classified into VHT-SIG-A1, VHT-SIG-A2, and VHT-SIG-B. Similarly, the HE-SIG is classified into HE-SIG-A1 to 4 and HE-SIG-B. On the assumption of technology update in the same standard, a Universal SIGNAL (U-SIG) field including additional control information can be included.

Furthermore, the PHY header can include information for identifying a BSS of a transmission source of the transmission frame (hereinafter, also referred to as BSS identification information). The information for identifying a BSS can be, for example, a Service Set Identifier (SSID) of the BSS or a MAC address of a base station apparatus of the BSS. The information for identifying a BSS can be a value unique to the BSS (e.g., a BSS Color, and the like) other than an SSID or a MAC address.

The PPDU is modulated in accordance with the corresponding standard. In the IEEE 802.11n standard, for example, a PPDU is modulated into an orthogonal frequency division multiplexing (OFDM) signal.

The MPDU includes a MAC layer header (MAC header) including header information and the like for performing signal processing in the MAC layer, a MAC service data unit (MSDU) that is a data unit processed in the MAC layer or a frame body, and a Frame check sequence (FCS) for checking whether there is an error in the frame. Multiple MSDUs can be aggregated as an Aggregated MSDU (A-MSDU).

The frame types of transmission frames of the MAC layer are broadly classified into three frame types, namely a management frame for managing an association state and the like between apparatuses, a control frame for managing a communication state between apparatuses, and a data frame including actual transmission data, and each frame type is further classified into multiple subframe types. The control frame includes a reception completion notification (acknowledge or Ack) frame, a transmission request (request to send or RTS) frame, a reception preparation completion (clear to send or CTS) frame, and the like. The management frame includes a Beacon frame, a Probe request frame, a Probe response frame, an Authentication frame, an Association request frame, an Association response frame, and the like. The data frame includes a Data frame, a polling (CF-poll) frame, and the like. Each apparatus can ascertain the frame type and the subframe type of a received frame by reading the content of the frame control field included in the MAC header.

Further, an Ack may include a Block Ack. A Block Ack can give a reception completion notification with respect to multiple MPDUs. The Ack may include a Multi STA Block Ack (M-BA) including a reception completion notification for multiple communication apparatuses.

The beacon frame includes a Field in which an interval at which a beacon is transmitted (Beacon interval) and an SSID are described. The base station apparatus can periodically broadcast a beacon frame within a BSS, and each terminal apparatus can recognize the base station apparatus in the surroundings of the terminal apparatus by receiving the beacon frame. The action of the terminal apparatus recognizing the base station apparatus based on the beacon frame broadcast from the base station apparatus may be referred to as Passive scanning. On the other hand, the action of the terminal apparatus searching for the base station apparatus by broadcasting a probe request frame in the BSS may be referred to as active scanning. The base station apparatus can transmit a probe response frame in response to the probe request frame, and details described in the probe response frame are equivalent to those in the beacon frame.

A terminal apparatus recognizes a base station apparatus and performs association processing with respect to the base station apparatus. The association processing is classified into an Authentication procedure and an Association procedure. A terminal apparatus transmits an authentication frame (authentication request) to a base station apparatus that the terminal apparatus desires to associate with. Once the base station apparatus receives the authentication frame, then the base station apparatus transmits, to the terminal apparatus, an authentication frame (authentication response) including a status code indicating whether authentication can be made for the terminal apparatus. The terminal apparatus can determine whether the terminal apparatus has been allowed to be authenticated by the base station apparatus by reading the status code described in the authentication frame. Note that the base station apparatus and the terminal apparatus can exchange the authentication frame multiple times.

After the authentication procedure, the terminal apparatus transmits an association request frame to the base station apparatus in order to perform the association procedure. Once the base station apparatus receives the association request frame, the base station apparatus determines whether to allow association of the terminal apparatus and transmits an association response frame to notify the terminal apparatus of the intent. In the association response frame, an Association identifier (AID) for identifying the terminal apparatus is described in addition to the status code indicating whether to perform the association processing. The base station apparatus can manage multiple terminal apparatuses by configuring different AIDs for the terminal apparatuses for which the base station apparatus has allowed association.

After the association processing is performed, the base station apparatus and the terminal apparatus perform actual data transmission. In the IEEE 802.11 system, a distributed coordination function (DCF), a point coordination function (PCF), and mechanisms in which the aforementioned mechanisms are enhanced (an enhanced distributed channel access (EDCA) or a hybrid control mechanism (hybrid coordination function (HCF)), and the like) are defined. A case that the base station apparatus transmits signals to the terminal apparatus using the DCF will be described below as an example. However, the description also applies to a case that the terminal apparatus transmits signals to the base station apparatus using the DCF.

In the DCF, the base station apparatus and the terminal apparatus perform carrier sensing (CS) for checking usage of a radio channel in the surroundings of the apparatuses prior to communication. For example, in a case that the base station apparatus serving as a transmitting station receives a signal of a higher level than a predefined Clear channel assessment level (CCA level) on a radio channel, transmission of transmission frames on the radio channel is postponed. Hereinafter, a state in which a signal of a level that is equal to or higher than the CCA level is detected on the radio channel will be referred to as a busy (Busy) state, and a state in which a signal of a level that is equal to or higher than the CCA level is not detected will be referred to as an idle (Idle) state. In this manner, CS performed based on power of a signal actually received by each apparatus (receive power level) is called physical carrier sense (physical CS). Further, the CCA level is also called a carrier sensing level (CS level) or a CCA threshold (CCAT). Note that in a case that a signal in a level that is equal to or higher than the CCA level is detected, the base station apparatus and the terminal apparatus start to perform an operation of demodulating at least a signal of the PHY layer.

The base station apparatus performs carrier sensing in an inter frame space (IFS) in accordance with the type of transmission frame to be transmitted and determines whether the radio channel is in a busy state or idle state. A period in which the base station apparatus performs carrier sense varies depending on the frame type and the subframe type of a transmission frame to be transmitted by the base station apparatus. In the IEEE 802.11 system, multiple IFSs with different periods are defined, and there are a short frame interval (short IFS or SIFS) used for a transmission frame with the highest priority given, a polling frame interval (PCF IFS or PIFS) used for a transmission frame with a relatively high priority, a distribution control frame interval (DCF IFS or DIPS) used for a transmission frame with the lowest priority, and the like. In a case that the base station apparatus transmits a data frame with the DCF, the base station apparatus uses the DIFS.

The base station apparatus waits by a DIFS and then further waits for a random backoff time to prevent frame collision. In the IEEE 802.11 system, a random backoff time called a Contention window (CW) is used. CSMA/CA works with the assumption that a transmission frame transmitted by a certain transmitting station is received by a receiving station in a state in which there is no interference from other transmitting stations. Therefore, in a case that transmitting stations transmit transmission frames at the same timing, the frames collide against each other, and the receiving station cannot receive them properly. Thus, each transmitting station waits for a randomly configured time before starting transmission, and thus collision of frames can be avoided. In a case that the base station apparatus determines, through carrier sense, that a radio channel is in the idle state, the base station apparatus starts to count down a CW, acquires a transmission right for the first time after the CW becomes zero, and can transmit a transmission frame to the terminal apparatus. Note that, in a case that the base station apparatus determines through the carrier sense that the radio channel is in the busy state during the count-down of the CW, the base station apparatus stops the count-down of the CW. Thereafter, in a case that the radio channel becomes in the idle state, then the base station apparatus restarts the count-down of the remaining CW after the previous IFS.

Next, details of frame reception will be described. A terminal apparatus that is a receiving station receives a transmission frame, interprets the PHY header of the transmission frame, and demodulates the received transmission frame. Then, the terminal apparatus interprets the MAC header of the demodulated signal and thus can recognize whether the transmission frame is addressed to the terminal apparatus itself. Note that the terminal apparatus can also determine the destination of the transmission frame based on information described in the PHY header (for example, a Group identifier (Group ID or GID) described in VHT-SIG-A).

In a case that the terminal apparatus determines that the received transmission frame is addressed to the terminal apparatus and successfully demodulates the transmission frame without any error, the terminal apparatus is to transmit an ACK frame indicating the proper reception of the frame to the base station apparatus that is the transmitting station. The ACK frame is one of transmission frames with the highest priority transmitted only after a wait for the SIFS period (with no random backoff time). The base station apparatus ends the series of communication with the reception of the ACK frame transmitted from the terminal apparatus. Note that, in a case that the terminal apparatus is not able to receive the frame properly, the terminal apparatus does not transmit ACK. Thus, in a case that the ACK frame has not been received from the receiving station for a certain period (a length of SIFS + ACK frame) after the transmission of the frame, the base station apparatus considers the communication to be failed and ends the communication. In this manner, an end of a single communication operation (also called a burst) in the IEEE 802.11 system is to be determined based on whether an ACK frame is received, except for special cases such as a case of transmission of a broadcast signal such as a beacon frame, a case that fragmentation for splitting transmission data is used, or the like.

In a case that the terminal apparatus determines that the received transmission frame is not addressed to the terminal apparatus itself, the terminal apparatus configures a Network allocation vector (NAV) based on the Length of the transmission frame described in the PHY header or the like. The terminal apparatus does not attempt communication during the period configured in the NAV. In other words, because the terminal apparatus performs the same operation as in the case that the terminal apparatus determines the radio channel is in the busy state through physical CS for the period configured in the NAV, the communication control based on the NAV is also called virtual carrier sense (virtual CS). The NAV is also configured by a transmission request (request to send or RTS) frame or a reception preparation completion (clear to send or CTS) frame, which are introduced to solve a hidden terminal problem in addition to the case that the NAV is configured based on the information described in the PHY header.

Unlike the DCF in which each apparatus performs carrier sense and autonomously acquires the transmission right, with respect to the PCF, a control station called a Point coordinator (PC) controls the transmission right of each apparatus within a BSS. In general, a base station apparatus serves as a PC and acquires the transmission right of a terminal apparatus within a BSS.

A communication period using the PCF includes a contention free period (CFP) and a contention period (CP). Communication is performed based on the aforementioned DCF during a CP, and a PC controls the transmission right during a CFP. The base station apparatus serving as a PC broadcasts a beacon frame with description of a CFP period (CFP Max duration) and the like in a BSS prior to communication with a PCF. Note that the PIFS is used for transmission of the beacon frame broadcast at the time of a start of transmission by the PCF, and the beacon frame is transmitted without waiting for the CW. The terminal apparatus that has received the beacon frame configures the CFP period described in the beacon frame in a NAV. Hereinafter, the terminal apparatus can acquire the transmission right only in a case that a signal (e.g., a data frame including CF-poll) for signalling the acquisition of the transmission right transmitted by the PC is received, until the NAV elapses or a signal (e.g., a data frame including CF-end) broadcasting the end of the CFP in a BSS is received. Note that, because no frame collision occurs inside the same BSS during the CFP, each terminal apparatus does not take a random backoff time used in the DCF.

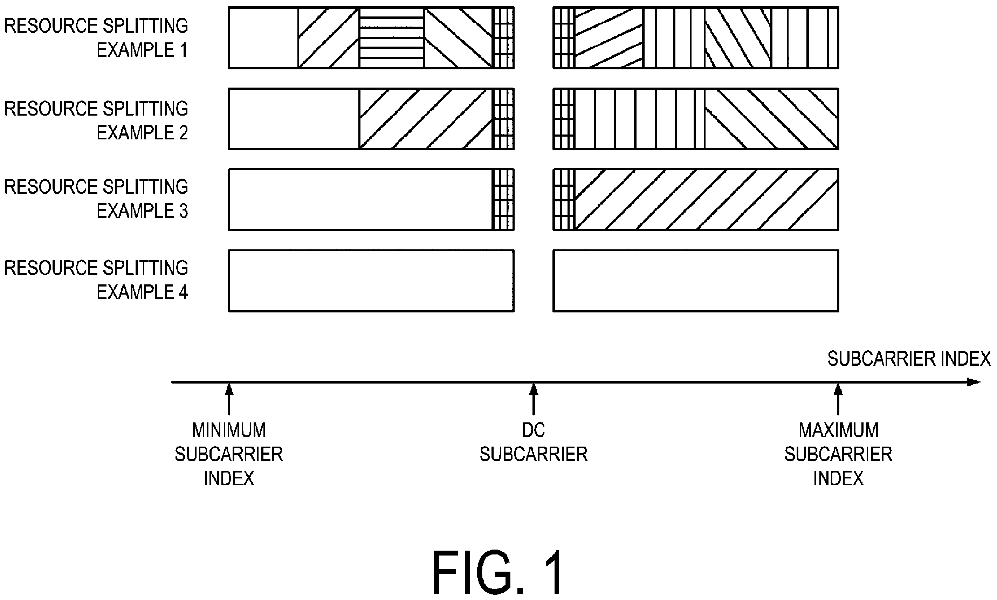

A radio medium can be split into multiple resource units (RUs). FIG. 1 is an overview diagram illustrating examples of split states of a radio medium. In the resource splitting example 1, for example, a radio communication apparatus can split a frequency resource (subcarrier) that is a radio medium into nine RUs. Similarly, in the resource splitting example 2, the radio communication apparatus can split a subcarrier that is a radio medium into five RUs. It is a matter of course that the resource splitting examples illustrated in FIG. 1 are merely examples, and for example, the multiple RUs can include a different number of subcarriers. The radio medium that is split into RUs can include not only a frequency resource but also a spatial resource. The radio communication apparatus (e.g., an access point apparatus) can transmit frames to multiple terminal apparatuses (e.g., multiple station apparatuses) at the same time by allocating frames directed to different terminal apparatuses to each RU. The access point apparatus can describe information (Resource allocation information) indicating the split state of the radio medium as common control information in the PHY header of the frame transmitted by the access point apparatus. Moreover, the access point apparatus can describe information (resource unit assignment information) indicating a RU where a frame directed to each station apparatus is allocated as unique control information in the PHY header of the frame transmitted by the access point apparatus.

Multiple terminal apparatuses (e.g., multiple station apparatuses) can transmit frames at the same time by transmitting the frames allocated to the RUs allocated to the terminal apparatuses. The multiple station apparatuses can perform frame transmission after waiting for a prescribed period of time after receiving the frame (Trigger frame (TF)) including trigger information transmitted from the access point apparatus. Each station apparatus can recognize the RU allocated to the station apparatus based on the information described in the TF. Each station apparatus can also acquire the RU through a random access with reference to the TF.

The access point apparatus can allocate multiple RUs to one station apparatus at the same time. The multiple RUs can include continuous subcarriers or can include discontinuous subcarriers. The access point apparatus can transmit one frame using multiple RUs allocated to one station apparatus or can transmit multiple frames allocated to different RUs. At least one of the multiple frames can be a frame including common control information for transmitting Resource allocation information to multiple station apparatuses.

One station apparatus can be allocated multiple RUs by the access point apparatus. The station apparatus can transmit one frame using the multiple allocated RUs. The station apparatus can use multiple allocated RUs to perform transmission of multiple frames allocated to different RUs. The multiple frames each can be a frame of a different frame type.

The access point apparatus can also allocate multiple AIDs to one station apparatus. The access point apparatus can allocate an RU to each of the multiple AIDs allocated to the one station apparatus. The access point apparatus can transmit the different frames using the RUs allocated to the multiple AIDs allocated to the one station apparatus. The different frames each can be a frame of a different frame type.

The one station apparatus can also be allocated multiple AIDs by the access point apparatus. The one station apparatus can be allocated an RU to each of the multiple AIDs allocated to the one station apparatus. The one station apparatus recognizes each of the RUs allocated to the corresponding one of the multiple AIDs allocated to the one station apparatus as RUs allocated to the one station apparatus and can transmit one frame using the multiple allocated RUs. The one station apparatus can transmit multiple frames using the multiple allocated RUs. At this time, the multiple frames can be transmitted with information indicating the AIDs associated with the respective allocated RUs described therein. One station apparatus can transmit the different frames, using the RUs allocated to the multiple allocated AIDs. The different frames can be frames of different frame types.

Information exchanged in a case that a certain radio communication apparatus performs communication with another radio communication apparatus is hereinafter also referred to as data.

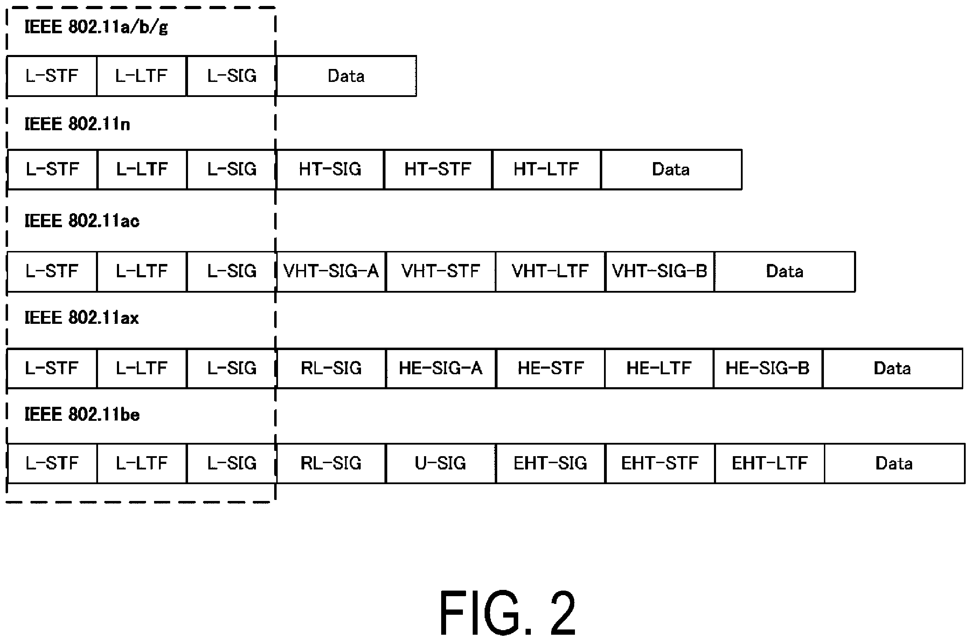

A radio communication apparatus includes any one of or both the function of transmitting a PPDU and a function of receiving a PPDU. FIG. 2 is a diagram illustrating an example of a configuration of the PPDU transmitted by the radio communication apparatus. A PPDU that is compliant with the IEEE 802.11a/b/g standard includes L-STF, L-LTF, L-SIG, and a data frame (a MAC Frame, a MAC frame, a payload, a data part, data, information bits, and the like). A PPDU that is compliant with the IEEE 802.11n standard includes L-STF, L-LTF, L-SIG, HT-SIG, HT-STF, HT-LTF, and a data frame. A PPDU that is compliant with the IEEE 802.11ac standard includes some or all of L-STF, L-LTF, L-SIG, VHT-SIG-A, VHT-STF, VHT-LTF, VHT-SIG-B, and a Data frame. A PPDU in the IEEE 802.11ax standard includes some or all of L-STF, L-LTF, L-SIG, RL-SIG in which L-SIG is temporally repeated, HE-SIG-A, HE-STF, HE-LTF, HE-SIG-B, and a Data frame. A PPDU studied in the IEEE 802.11be standard includes some or all of L-STF, L-LTF, L-SIG, RL-SIG, U-SIG, EHT-SIG, EHT-STF, EHT-LTF, and a Data frame.

L-STF, L-LTF, and L-SIG surrounded by the dotted line in FIG. 2 are configurations commonly used in the IEEE 802.11 standard (hereinafter, L-STF, L-LTF, and L-SIG will also be collectively referred to as an L-header). For example, a radio communication apparatus that is compliant with the IEEE 802.11a/b/g standard can appropriately receive an L-header in a PPDU that is compliant with the IEEE 802.11n/ac/ax/be standard. A radio communication apparatus that is compliant with the IEEE 802.11a/b/g standard can receive the PPDU that is compliant with the IEEE 802.11n/ac/ax/be standard while considering it to be a PPDU that is compliant with the IEEE 802.11a/b/g standard.

However, because the radio communication apparatus that is compliant with the IEEE 802.11a/b/g standard cannot demodulate the PPDU that is compliant with the IEEE 802.11n/ac/ax/be standard following the L-header, it is not possible to demodulate information about a Transmitter Address (TA), a Receiver Address (RA), and a Duration/ID field used for configuring a NAV.

As a method for the radio communication apparatus that is compliant with the IEEE 802.11a/b/g standard to appropriately configure the NAV (or perform a receiving operation for a prescribed period), IEEE 802.11 defines a method of inserting Duration information to the L-SIG. Information about a transmission speed in the L-SIG (a RATE field, an L_RATE field, an L_RATE, an L_DATARATE, and an L_DATARATE field) and information about a transmission period (a LENGTH field, an L_LENGTH field, and an L_LENGTH) are used by the radio communication apparatus that is compliant with the IEEE 802.11a/b/g standard to appropriately configure a NAV.

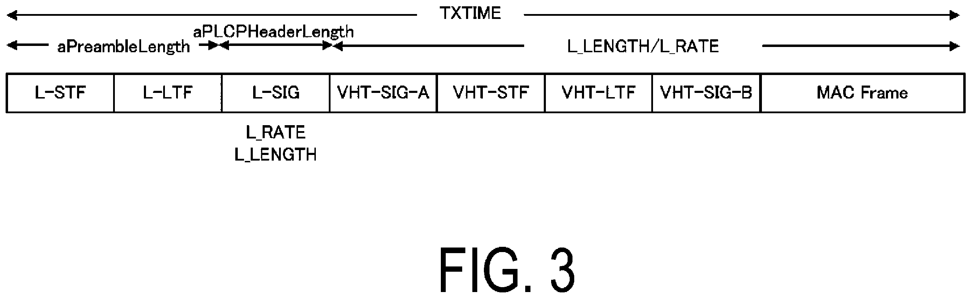

FIG. 3 is a diagram illustrating an example of a method of Duration information inserted into L-SIG. Although a PPDU configuration that is compliant with the IEEE 802.11ac standard is illustrated as an example in FIG. 3, the PPDU configuration is not limited thereto. A PPDU configuration that is compliant with the IEEE 802.11n standard and a PPDU configuration that is compliant with the IEEE 802.11ax standard may be employed. TXTIME includes information about a length of a PPDU, aPreambleLength includes information about a length of a preamble (L-STF + L-LTF), and aPLCPHeaderLength includes information about a length of a PLCP header (L-SIG). L_LENGTH is calculated based on Signal Extension that is a virtual period configured for compatibility with the IEEE 802.11 standard, Nₒₚₛ related to L_RATE, aSymbolLength that is information about a period of one symbol (a symbol, an OFDM symbol, or the like), aPLCPServiceLength indicating the number of bits included in PLCP Service field, and aPLCPConvolutionalTailLength indicating the number of tail bits of a convolutional code. The radio communication apparatus can calculate L_LENGTH and insert L_LENGTH into L-SIG. The radio communication apparatus can calculate L-SIG Duration. L-SIG Duration indicates information about a PPDU including L_LENGTH and information about a period that is the sum of periods of Ack and SIFS expected to be transmitted by the destination radio communication apparatus in response to the PPDU.

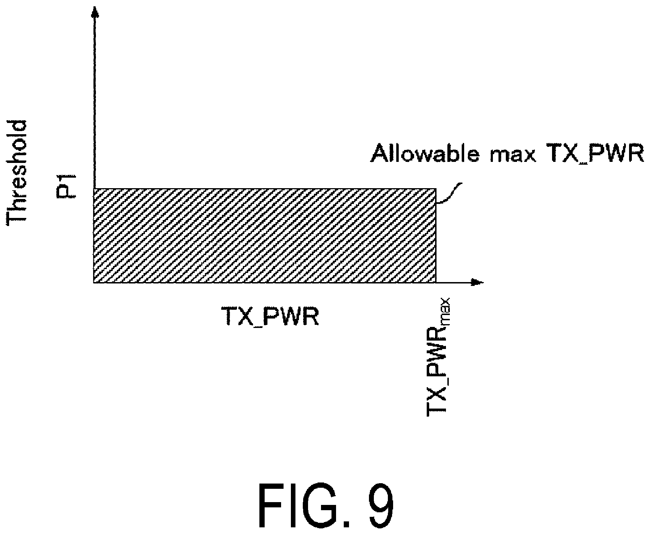

FIG. 9 illustrates an example of a MAC Frame format. The MAC frame described herein refers to the data frame in FIG. 2 (a MAC frame, a payload, a data part, data, an information bit, and the like) and the MAC frame in FIG. 3. The MAC frame includes Frame Control, Duration/ID, Address 1, Address 2, Address 3, Sequence Control, Address 4, QoS Control, HT Control, Frame Body, and FCS.

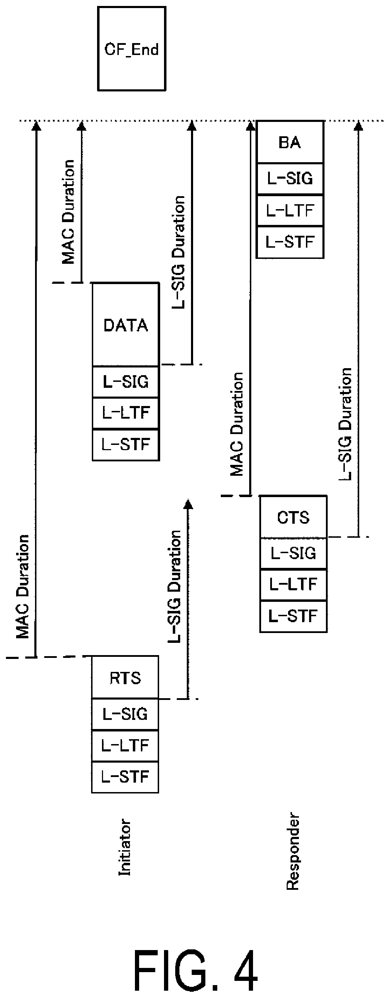

FIG. 4 is a diagram illustrating an example of L-SIG Duration in L-SIG TXOP Protection. DATA (a frame, a payload, data, and the like) include some of or both the MAC frame and the PLCP header. BA includes Block Ack or Ack. A PPDU includes L-STF, L-LTF, and L-SIG and can further include any one or more of DATA, BA, RTS, or CTS. Although L-SIG TXOP Protection using RTS/CTS is illustrated in the example illustrated in FIG. 4, CTS-to-Self may be used. Here, MAC Duration is a period indicated by a value of Duration/ID field. Initiator can transmit a CF_End frame for providing a notification regarding an end of the L-SIG TXOP Protection period.

Next, a method of identifying a BSS from a frame received by a radio communication apparatus will be described. In order for the radio communication apparatus to identify the BSS from the received frame, the radio communication apparatus that transmits a PPDU preferably inserts information (BSS Color, BSS identification information, a value unique to the BSS) for identifying the BSS into the PPDU, and it is possible to describe information indicating BSS Color in HE-SIG-A.

The radio communication apparatus can transmit L-SIG multiple times (L-SIG Repetition). For example, demodulation accuracy of L-SIG is improved by the radio communication apparatus on the reception side receiving L-SIG transmitted multiple times by using Maximum Ratio Combining (MRC). Moreover, in a case that reception of L-SIG is properly completed by using MRC, the wireless communication apparatus can interpret the PPDU including the L-SIG as a PPDU that is compliant with the IEEE 802.11ax standard.

Even during the operation of receiving the PPDU, the radio communication apparatus can perform a reception operation of a PPDU other than the corresponding PPDU (e.g., the preamble, L-STF, L-LTF, and the PLCP header defined by IEEE 802.11) (also referred to as a double-reception operation). In a case that a part of a PPDU other than the corresponding PPDU is detected during the operation of receiving the PPDU, the wireless communication apparatus can update a destination address, a transmission source address, and a part or an entirety of information about the PPDU or a DATA period.

An ACK and a BA can also be referred to as a response (response frame). A probe response, an authentication response, and an association response can also be referred to as a response.

### 1. First Embodiment

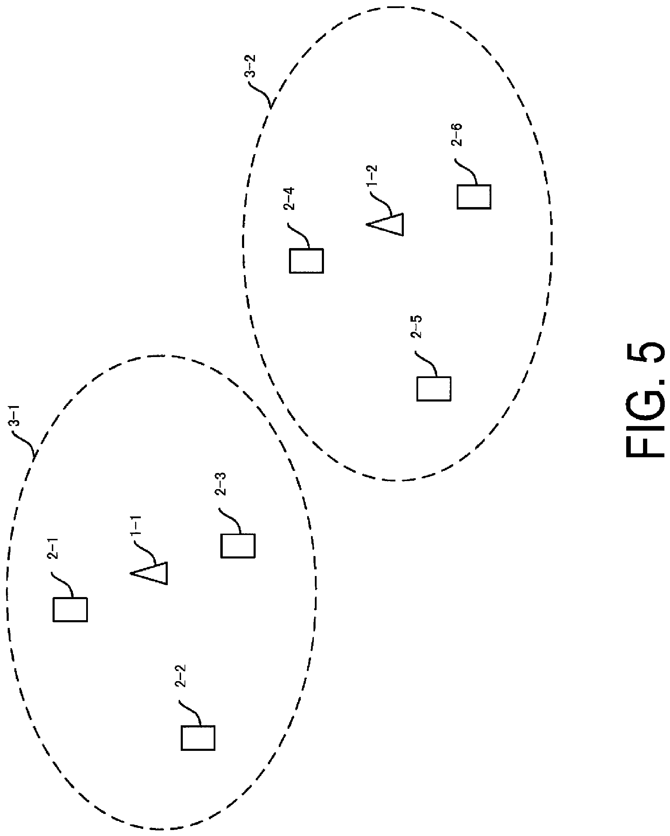

FIG. 5 is a diagram illustrating an example of a radio communication system according to the present embodiment. A radio communication system 3-1 includes a radio communication apparatus 1-1 and radio communication apparatuses 2-1 to 2-3. Note that the radio communication apparatus 1-1 will also be referred to as a base station apparatus 1-1, and the radio communication apparatuses 2-1 to 2-3 will also be referred to as terminal apparatuses 2-1 to 2-3. Each of the radio communication apparatuses 2-1 to 2-3 and each of the terminal apparatuses 2-1 to 2-3 may also be referred to as a radio communication apparatus 2A and a terminal apparatus 2A, respectively, as an apparatus connected to the radio communication apparatus 1-1. The radio communication apparatus 1-1 and the radio communication apparatus 2A are wirelessly associated with each other and are in a state in which they can transmit and/or receive PPDUs to and from each other. The radio communication system according to the present embodiment may include a radio communication system 3-2 in addition to the radio communication system 3-1. The radio communication system 3-2 includes a radio communication apparatus 1-2 and radio communication apparatuses 2-4 to 2-6. Note that the radio communication apparatus 1-2 will also be referred to as a base station apparatus 1-2 and the radio communication apparatuses 2-4 to 2-6 will also be referred to as terminal apparatuses 2-4 to 2-6. Each of the radio communication apparatuses 2-4 to 2-6 and each of the terminal apparatuses 2-4 to 2-6 will also be referred to as a radio communication apparatus 2B and a terminal apparatus 2B, respectively, as apparatuses associated to the radio communication apparatus 1-2. Although the radio communication system 3-1 and the radio communication system 3-2 form different BSSs, this does not necessarily mean that Extended Service Sets (ESSs) are different. An ESS indicates a service set forming a Local Area Network (LAN). In other words, radio communication apparatuses belonging to the same ESS can be regarded as belonging to the same network from a higher layer. The BSSs are connected via a Distribution System (DS) and form an ESS. Note that each of the radio communication systems 3-1 and 3-2 can further include multiple radio communication apparatuses.

In FIG. 5, it is assumed that signals transmitted by the radio communication apparatus 2A reach the radio communication apparatus 1-1 and the radio communication apparatus 2B while the signals do not reach the radio communication apparatus 1-2 in the following description. In other words, in a case that the radio communication apparatus 2A transmits a signal using a certain channel, the radio communication apparatus 1-1 and the radio communication apparatus 2B determine that the channel is in the busy state, whereas the radio communication apparatus 1-2 determines that the channel is in the idle state. It is assumed that signals transmitted by the radio communication apparatus 2B arrive at the radio transmission apparatus 1-2 and the radio communication apparatus 2A, but do not arrive at the radio communication apparatus 1-1. In other words, in a case that the radio communication apparatus 2B transmits a signal using a certain channel, the radio communication apparatus 1-2 and the radio communication apparatus 2A determine that the channel is in the busy state, whereas the radio communication apparatus 1-1 determines that the channel is in the idle state.

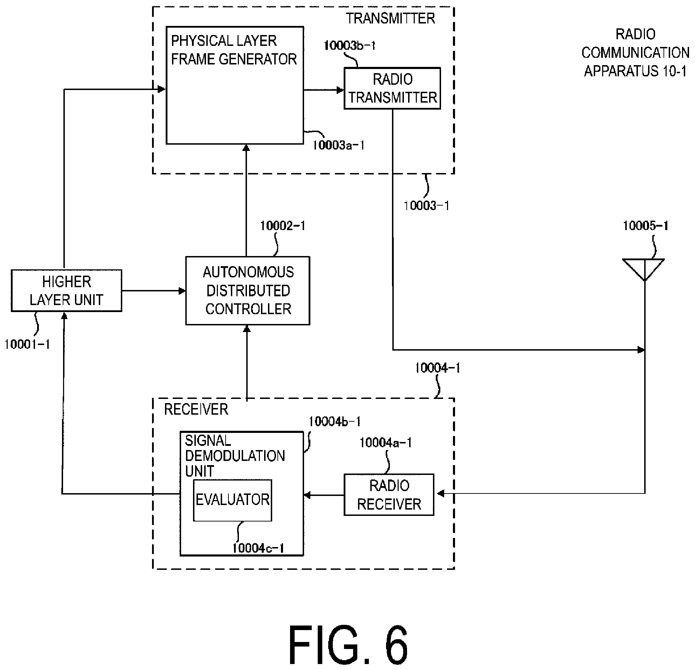

FIG. 6 is a diagram illustrating an example of an apparatus configuration of the radio communication apparatuses 1-1, 1-2, 2A, and 2B (hereinafter, collectively referred to as a radio communication apparatus 10-1 or a station apparatus 10-1 or also simply referred to as a station apparatus). The radio communication apparatus 10-1 includes a higher layer unit (higher layer processing step) 10001-1, an autonomous distributed controller (autonomous distributed control step) 10002-1, a transmitter (transmission step) 10003-1, a receiver (reception step) 10004-1, and an antenna unit 10005-1.

The higher layer unit 10001-1 performs information processing for layers higher than the physical layer, for example, the MAC layer and the LLC layer in regard to information (information related to a transmission frame, a Management Information Base (MIB), and the like) handled in the radio communication apparatus and a frame received from another radio communication apparatus.

The higher layer unit 10001-1 can signal information related to a frame and traffic transmitted to a radio medium to the autonomous distribution controller 10002-1. The information related to a frame and traffic may be control information included in a management frame such as a beacon, for example, or may be measurement information reported by another radio communication apparatus to the radio communication apparatus itself. Moreover, the information may be control information included in a management frame or a control frame with the destination not limited (the information may be directed to the apparatus, may be directed to another apparatus, may be broadcasting, or may be multicasting).

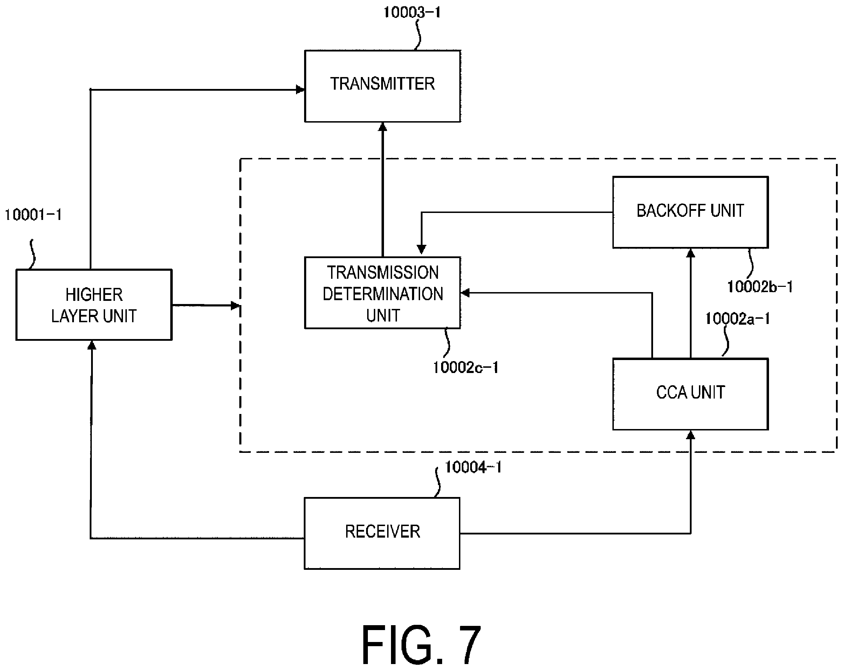

FIG. 7 is a diagram illustrating an example of an apparatus configuration of the autonomous distributed controller 10002-1. The autonomous distributed controller 10002-1 will also be referred to as a controller 10002-1 and includes a CCA processor (CCA step) 10002a-1, a backoff processor (backoff step) 10002b-1, and a transmission determiner (transmission determination step) 10002c-1.

The CCA processor 10002a-1 can perform determination of a state of a radio resource (including determination between a busy state and an idle state) using any one of or both information related to reception signal power received via the radio resource and information related to the reception signal (including information after decoding) provided as a notification from the receiver 10004-1. The CCA unit 10002a-1 can notify the backoff unit 10002b-1 and the transmission determination unit 10002c-1 of the state determination information of the radio resources.

The backoff unit 10002b-1 can perform backoff using the state determination information of the radio resources. The backoff unit 10002b-1 has a function of generating a CW and counting down the CW. For example, it is possible to perform counting-down of the CW in a case that the state determination information of the radio resource indicates an idle state, for example, and it is possible to stop the counting-down of the CW in a case that the state determination information of the radio resource indicates a busy state. The backoff unit 10002b-1 can notify the transmission determination unit 10002c-1 of the value of the CW.

The transmission determination unit 10002c-1 performs transmission determination using either of or both the state determination information of the radio resources or/and the value of the CW. For example, the notification of transmission determination information can be provided to the transmitter 10003-1 in a case that the state determination information of the radio resources indicates idle and the value of the CW is zero. The notification of the transmission determination information can be provided to the transmitter 10003-1 in a case that the state determination information of the radio resources indicates idle.

The transmitter 10003-1 includes a physical layer frame generator (physical layer frame generation step) 10003a-1 and a radio transmitter (radio transmission step) 10003b-1. Note that the physical layer frame generator (physical layer frame generation step) may be referred to as a frame generator (frame generation step). The physical layer frame generator 10003a-1 includes a function of generating a physical layer frame (hereinafter, also referred to as a frame or a PPDU) based on the transmission determination information signaled from the transmission determination unit 10002c-1. The physical layer frame generator 10003a-1 includes an encoder that performs error correction coding processing on data received from the higher layer and generates an encoding block. The physical layer frame generator 10003a-1 also includes a function of performing modulation, precoding filter multiplication, and the like. The physical layer frame generator 10003a-1 sends the generated physical layer frame to the radio transmitter 10003b-1.

The frame generated by the physical layer frame generator 10003a-1 includes a trigger frame for indicating, to the radio communication apparatus that is a destination terminal, frame transmission. The trigger frame includes information indicating the RU to be used by the radio communication apparatus that has received the indication for the frame transmission to transmit the frame.

The radio transmitter 10003b-1 converts the physical layer frame generated by the physical layer frame generator 10003a-1 to a signal in a Radio Frequency (RF) band to generate a radio frequency signal. Processing performed by the radio transmitter 10003b-1 includes digital-to-analog conversion, filtering, frequency conversion from a baseband to an RF band, and the like.

The receiver 10004-1 includes a wireless receiver (wireless reception step) 10004a-1 and a signal demodulation unit (signal demodulation step) 10004b-1. The receiver 10004-1 generates information about received signal power from a signal in the RF band received by the antenna part 10005-1. The receiver 10004-1 can notify the CCA part 10002a-1 of the information about the received signal power and the information about the received signal.

The radio receiver 10004a-1 has a function of converting a signal in the RF band received by the antenna unit 10005-1 into a baseband signal and generating a physical layer signal (e.g., a physical layer frame). Processing performed by the radio receiver 10004a-1 includes frequency conversion processing from the RF band to the baseband, filtering, and analog-to-digital conversion.

The signal demodulation unit 10004b-1 has a function of demodulating a physical layer signal generated by the radio receiver 10004a-1. Processing performed by the signal demodulation unit 10004b-1 includes channel equalization, demapping, error correction decoding, and the like. The signal demodulation unit 10004b-1 can extract, from the physical layer signal, information included in the PHY header, information included in the MAC header, and information included in the transmission frame, for example. The signal demodulation unit 10004b-1 can notify the higher layer unit 10001-1 of the extracted information. Note that the signal demodulation unit 10004b-1 can extract any one or all of the information included in the PHY header, the information included in the MAC header, and the information included in the transmission frame. An evaluator (evaluation step) 10004c-1 performs prescribed evaluation on the thus extracted information included in the PHY header, the MAC header and the like and notifies the higher layer processor of detail in accordance with the evaluation.

The antenna unit 10005-1 includes a function of transmitting the radio frequency signal generated by the radio transmitter 10003b-1 to a radio space. Also, the antenna unit 10005-1 includes a function of receiving the radio frequency signal and passing the radio frequency signal to the radio receiver 10004a-1.

The radio communication apparatus 10-1 can cause radio communication apparatuses in the surroundings of the radio communication apparatus 10-1 to configure NAV corresponding to a period during which the radio communication apparatus uses a radio medium by describing information indicating the period in the PHY header or the MAC header of the frame to be transmitted. For example, the radio communication apparatus 10-1 can describe the information indicating the period in a Duration/ID field or a LENGTH field of the frame to be transmitted. The NAV period configured to radio communication apparatuses in the surroundings of the radio communication apparatus will be referred to as a TXOP period (or simply TXOP) acquired by the radio communication apparatus 10-1. In addition, the radio communication apparatus 10-1 that has acquired the TXOP will be referred to as a TXOP acquirer (TXOP holder). The type of frame to be transmitted by the radio communication apparatus 10-1 to acquire TXOP is not limited to any frame type, and the frame may be a control frame (e.g., an RTS frame or a CTS-to-self frame) or may be a data frame.

The radio communication apparatus 10-1 that is a TXOP holder can transmit the frame to radio communication apparatuses other than the radio communication apparatus during the TXOP. In a case that the radio communication apparatus 1-1 is a TXOP holder, the radio communication apparatus 1-1 can transmit a frame to a wireless communication apparatus 2A during the TXOP period. The radio communication apparatus 1-1 can indicate, to the radio communication apparatus 2A, frame transmission addressed to the radio communication apparatus 1-1 during the TXOP period. The radio communication apparatus 1-1 can transmit, to the radio communication apparatus 2A, a trigger frame including information for indicating frame transmission addressed to the radio communication apparatus 1-1 during the TXOP period.

The wireless communication apparatus 1-1 may acquire a TXOP for the entire communication band (e.g., operation bandwidth) in which frame transmission is likely to be performed, or may acquire a TXOP for a specific communication band (band) such as a communication band in which frames are actually transmitted (e.g., transmission bandwidth).

The radio communication apparatus that provides an indication for transmitting a frame in the TXOP period acquired by the radio communication apparatus 1-1 is not necessarily limited to radio communication apparatuses associated to the radio communication apparatus. For example, the radio communication apparatus can provide an indication for transmitting frames to radio communication apparatuses that are not associated to the radio communication apparatus in order to cause the radio communication apparatuses in the surroundings of the radio communication apparatus to transmit management frames such as a Reassociation frame or control frames such as an RTS/CTS frame.

Furthermore, TXOP in EDCA that is a data transmission method different from DCF will also be described. The IEEE 802.11e standard relates to the EDCA, and defines the TXOP from the perspective of Quality of Service (QoS) assurance for various services such as video transmission or Voice over IP (VoIP). The services are roughly classified into four access categories, namely VOice (VO), VIdeo (VI), Best Effort (BE), and BacK ground (BK). In general, the services include VO, VI, BE, and BK, starting with the highest priority in this order. Each of the access categories has parameters including CWmin as a minimum value of CW, CWmax as a maximum value, Arbitration IFS (AIFS) as a type of IFS, and TXOP limit as an upper limit value of the transmission opportunity, which are configured to give a difference in the priority. For example, it is possible to perform data transmission prioritized over the other access categories by setting CWmin, CWmax, and AIFS of VO with the highest priority for the purpose of voice transmission equal to a relatively small value as compared with the other access categories. For example, for the VI, where the amount of transmission data is relatively large due to video transmission, the TXOP limit can be configured to be larger, so that the transmission opportunity can be longer than the other access categories. In this manner, four parameter values of each of the access categories are adjusted for the purpose of QoS assurance in accordance with various services.

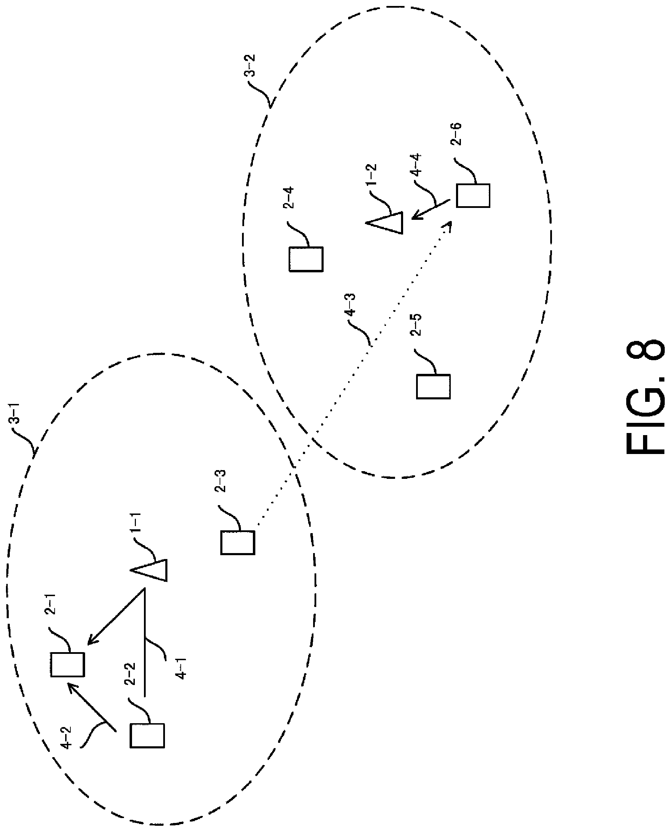

Next, with reference to FIG. 8, an example of implementation of a direct link will be described. Among the reference signs used in FIG. 8, the reference signs the same as those in FIG. 5 are similar to those described in FIG. 5. A radio system 3-1 includes a base station apparatus 1-1, a terminal apparatus 2-1 (radio communication apparatus 2-1), a terminal apparatus 2-2 (radio communication apparatus 2-2), and a terminal apparatus 2-3 (radio communication apparatus 2-3). In a case that the terminal apparatus 2-2 transmits data to the terminal apparatus 2-1, a direct link refers to performing direct communication (4-2) from the terminal apparatus 2-2 to the terminal apparatus 2-1 without passing through communication (4-1) via the base station apparatus 1-1 and the base station apparatus 1-1. In a case that the direct link is used, the terminal apparatus 2-1 transmits a direct link discovery request to the terminal apparatus 2-2 via the base station apparatus 1-1. The terminal apparatus 2-2 that has received the direct link discovery request via the base station apparatus 1-1 transmits a direct link discovery response to the terminal apparatus 2-1, using a direct path. In a case that the terminal apparatus 2-1 succeeds in receiving the direct link discovery response, it can be determined that direct communication can be performed between the terminal apparatus 2-1 and the terminal apparatus 2-2.

Subsequently, the terminal apparatus 2-1 transmits a direct link setup request to the terminal apparatus 2-2 via the base station apparatus 1-1. The terminal apparatus 2-1 that transmits the direct link setup request may be referred to as an initiator. The terminal apparatus 2-2 that has received the direct link setup request transmits a direct setup response to the terminal apparatus 2-1 via the base station apparatus 1-1. The terminal apparatus 2-2 that transmits the direct setup response may be referred to as a responder. After these direct link setup request and direct link setup response are exchanged correctly, it is considered that the direct link has been established, and the terminal apparatus 2-1 and the terminal apparatus 2-2 can directly communicate with each other without using the base station apparatus 1-1 in a case of communicating with each other. The direct link setup request and the direct link setup response may include various pieces of control information, of which examples include pieces of control information such as information used in encryption communication, e.g., information related to a key and the like. In a case that pieces of information used in encryption communication are exchanged in conjunction with the exchange of the direct link setup request and the direct link setup response, encryption may be used in the direct link.

In a case that direct communication is configured and PD-based SR is specified as a method for intra-BSS SR, the base station apparatus 1-1 may include information of allowable maximum transmit power in SR link information.

FIG. 9 is a diagram illustrating an example of a relationship between a threshold of a receive power detection level and allowable maximum transmit power used for channel access. The present example may be an example of a case that the base station apparatus 1-1 does not include the information of the allowable maximum transmit power in the SR link information. In a case that the base station apparatus 1-1 does not include the information of the allowable maximum transmit power in the SR link information, the threshold of the receive power detection level is required to be equal to or less than P1. In a case that the receive power detection level is equal to or less than the threshold, the terminal apparatus that has received the SR link information can perform transmission. Power in the transmission is required to be equal to or less than allowable maximum transmit power TX_PWRmax. Here, the value of TX_PWRmax may be constant, regardless of the value of the threshold used. Note that, in a case that the receive power detection level exceeds the threshold, transmission cannot be performed.

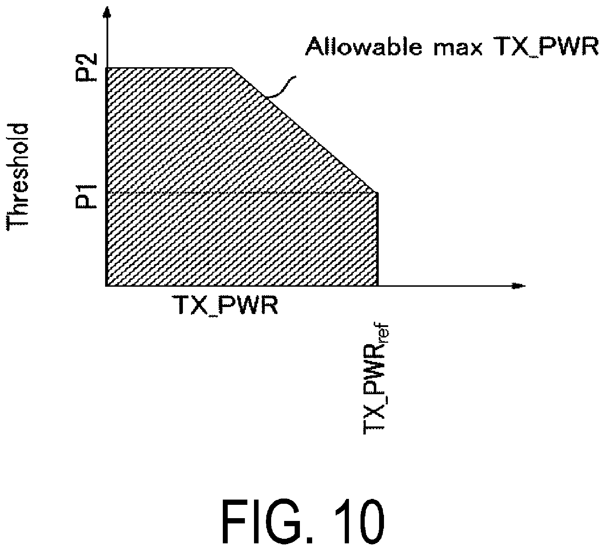

FIG. 10 is a diagram illustrating an example of a relationship between the threshold of the receive power detection level and the allowable maximum transmit power used for channel access. The present example may be an example of a case that the base station apparatus 1-1 includes the information of the allowable maximum transmit power in the SR link information. In a case that the base station apparatus 1-1 includes the information of the allowable maximum transmit power in the SR link information, information in the SR link information may indicate allowable maximum transmit power TX_PWRref that is applied in a case that the threshold is sufficiently low. Note that it is preferable that TX_PWRref be a value lower than TX_PWRmax. Consequently, interference can be reduced as compared to a case that TX_PWRmax is used, and thus multiple nodes can share the same channel.

The threshold of the receive power detection level is required to be equal to or less than P2. In a case that the receive power detection level is equal to or less than the threshold, the terminal apparatus that has received the SR link information can perform transmission. Power in the transmission is required to be equal to or less than the allowable maximum transmit power. Here, in a case that the threshold is between P1 and P2, the allowable maximum transmit power increases in proportion to reduction of the threshold. In a case that the threshold is equal to or less than P1, the allowable maximum transmit power may be constant at TX_PWRref, regardless of the value of the threshold used. In the present example, in comparison to the example illustrated in FIG. 9, even in a case that the value of the threshold is larger than P1, transmission can be performed in a case that the receive power detection level is lower than the threshold, on the condition that the value of the threshold is less than P2.

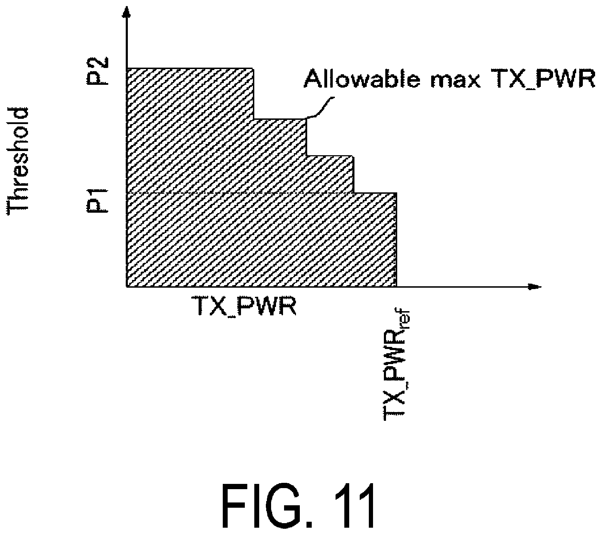

FIG. 11 is a diagram illustrating an example of a relationship between the threshold of the receive power detection level and the allowable maximum transmit power used for channel access. The present example may be an example of a case that the base station apparatus 1-1 includes the information of the allowable maximum transmit power in the SR link information. In a case that the base station apparatus 1-1 includes the information of the allowable maximum transmit power in the SR link information, information in the SR link information may indicate allowable maximum transmit power TX_PWRref that is applied in a case that the threshold is sufficiently low. Note that it is preferable that TX_PWRref be a value lower than TX _PWRmax. Consequently, interference can be reduced as compared to a case that TX_PWRmax is used, and thus multiple nodes can share the same channel.

The threshold of the receive power detection level is required to be equal to or less than P2. In a case that the receive power detection level is equal to or less than the threshold, the terminal apparatus that has received the SR link information can perform transmission. Power in the transmission is required to be equal to or less than the allowable maximum transmit power. Here, in a case that the threshold is between P1 and P2, the allowable maximum transmit power increases stepwise as the threshold reduces. In a case that the threshold is equal to or less than P1, the allowable maximum transmit power may be constant at TX_PWRref, regardless of the value of the threshold used. In the present example, in comparison to the example illustrated in FIG. 9, even in a case that the value of the threshold is larger than P1, transmission can be performed in a case that the receive power detection level is lower than the threshold, on the condition that the value of the threshold is less than P2.

As described above, the base station apparatus that transmits the SR link information determines whether or not to include the information of the allowable maximum transmit power in the SR link information. In a case of determining inclusion, the base station apparatus transmits the SR link information including the information of the allowable maximum transmit power. In a case of determining no inclusion, the base station apparatus transmits the SR link information not including the information of the allowable maximum transmit power.

The terminal apparatus that has received the SR link information determines whether or not the information of the allowable maximum transmit power is included in the SR link information. In a case that the information is not included, the terminal apparatus, in transmission, uses a prescribed value as the allowable maximum transmit power. In a case that the information is included, the terminal apparatus, in transmission, determines the allowable maximum transmit power by using the information of the allowable maximum transmit power. The terminal apparatus configures the threshold. In a case that the receive power detection level is equal to or less than (or is less than) the threshold, the terminal apparatus performs transmission. In that case, as transmit power, a value equal to or less than the allowable maximum transmit power is configured.

In a case that the terminal apparatus configures the threshold and determines that the information of the allowable maximum transmit power is included in the SR link information, the terminal apparatus configures the value equal to or less than P2 as the threshold. In a case that the terminal apparatus configures the threshold and determines that the information of the allowable maximum transmit power is not included in the SR link information, the terminal apparatus configures the value equal to or less than P1 as the threshold.

In a case that it is determined that the information of the allowable maximum transmit power is included in the SR link information, and the threshold is configured to be equal to or less than P1, the value indicated by the information of the allowable maximum transmit power is determined as the allowable maximum transmit power. In a case that it is determined that the information of the allowable maximum transmit power is included in the SR link information, and the threshold is configured between P1 and P2, a value obtained by subtracting a value corresponding to a difference between the threshold and P1 from the value indicated by the information of the allowable maximum transmit power is determined as the allowable maximum transmit power. The value obtained by subtracting the value corresponding to the difference between the threshold and P1 may be a value that increases in proportion to the difference between the threshold and P1. Alternatively, the value obtained by subtracting the value corresponding to the difference between the threshold and P1 may be a value that increases stepwise as the difference between the threshold and P1 increases.

Although the communication apparatuses according to an aspect of the present invention can perform communication in a frequency band (frequency spectrum), generally called unlicensed band, that does not require approval to use from a country or region, available frequency bands are not limited thereto. The communication apparatuses according to an aspect of the present invention can exhibit the effect in a frequency band called a white band or a shared spectrum (shared frequency band), the frequency band being not actually used in order to prevent interference between frequencies regardless of the approval to use for a specific service from a country or region, and the shared spectrum being expected to be shared by multiple service providers.

A program operated in the radio communication apparatuses according to an aspect of the present invention is a program (a program for causing a computer to function) for controlling a CPU or the like to implement the functions of the aforementioned embodiments according to an aspect of the present invention. In addition, information handled by these apparatuses is temporarily accumulated in a RAM at the time of processing, is then stored in various types of ROMs and HDDs, and is read by the CPU as necessary to be corrected and written. A semiconductor medium (e.g., a ROM, a non-volatile memory card, or the like), an optical recording medium (e.g., a DVD, an MO, an MD, a CD, a BD, or the like), a magnetic recording medium (e.g., a magnetic tape, a flexible disk, or the like), and the like can be examples of recording media for storing programs. In addition to implementing the functions of the aforementioned embodiments by performing loaded programs, the functions of the present invention may be implemented in processing performed in cooperation of an operating system, other application programs, and the like based on indications of those programs.

In a case of delivering these programs to market, the programs can be stored and distributed in a portable recording medium, or transferred to a server computer connected via a network such as the Internet. In this case, storage apparatuses of the server computer are also included in an aspect of the present invention. A part or an entirety of the communication apparatuses in the aforementioned embodiments may be implemented as an LSI that is typically an integrated circuit. The functional blocks of the communication apparatuses may be individually implemented as chips or may be partially or completely integrated into a chip. In a case that the functional blocks are made as integrated circuits, an integrated circuit controller for controlling them is added.

In addition, the circuit integration technique is not limited to LSI, and implementation as a dedicated circuit or a multi-purpose processor may be adopted. Moreover, in a case that a circuit integration technology that substitutes an LSI appears with the advance of the semiconductor technology, it is also possible to use an integrated circuit based on the technology.

Note that the invention of the present application is not limited to the above-described embodiments. The radio communication apparatus according to the invention of the present application is not limited to the application in the mobile station apparatus, and, needless to say, can be applied to a fixed-type electronic apparatus installed indoors or outdoors, or a stationary-type electronic apparatus, for example, an AV apparatus, a kitchen apparatus, a cleaning or washing machine, an air-conditioning apparatus, office equipment, a vending machine, and other household apparatuses.

Although the embodiments of the invention have been described in detail above with reference to the drawings, a specific configuration is not limited to the embodiments, and designs and the like that do not depart from the essential spirit of the invention also fall within the claims.

### Industrial Applicability

An aspect of the present invention can be preferably used in a communication apparatus and a communication method.

### Reference Signs List

1-1, 1-2, 2-1 to 2-6, 2A, 2B Radio communication apparatus
3-1, 3-2 Management range
7-1, 7-2, 7-3, 7-4 Sector
10-1 Radio communication apparatus
10001-1 Higher layer unit
10002-1 (Self-supporting distributed) controller
10002a-1 CCA unit
10002b-1 Backoff unit
10002c-1 Transmission determination unit
10003-1 Transmitter
10003a-1 Physical layer frame generator
10003b-1 Radio transmitter
10004-1 Receiver
10004a-1 Radio receiver
10004b-1 Signal demodulation unit
10004c-1 Evaluator
10005-1 Antenna unit
100-1, 100-3, 100-6, 100-11 Busy state
100-4, 100-7 Random backoff
100-2, 100-5, 100-8, 100-10 Radio frame
1401, 1421 Radio frame

## Claims

1. A terminal apparatus comprising:
a transmitter; and
a receiver, wherein
the receiver receives SR link information including information of an allowable maximum transmit power,
in a case that a receive power received by the receiver is equal to or less than a threshold, the transmitter transmits a transmission frame,
in transmission of the transmission frame, a transmit power is configured to be equal to or less than the allowable maximum transmit power,
in a case that the threshold is equal to or less than a first value, the allowable maximum transmit power is configured to a value indicated by the information of the allowable maximum transmit power, and
in a case that the threshold is larger than the first value and is equal to or less than a second value, the allowable maximum transmit power is configured to a value obtained based on the value indicated by the information of the allowable maximum transmit power and the threshold.

2. A base station apparatus comprising
a transmitter, wherein
the transmitter transmits SR link information including information of an allowable maximum transmit power.

3. A communication method in a terminal apparatus, the communication method comprising the steps of:
receiving SR link information including information of an allowable maximum transmit power;
in a case that a receive power is equal to or less than a threshold, transmitting a transmission frame;
in transmission of the transmission frame, configuring a transmit power to be equal to or less than the allowable maximum transmit power;
in a case that the threshold is equal to or less than a first value, configuring the allowable maximum transmit power to a value indicated by the information of the allowable maximum transmit power; and
in a case that the threshold is larger than the first value and is equal to or less than a second value, configuring the allowable maximum transmit power to a value obtained based on the value indicated by the information of the allowable maximum transmit power and the threshold.
